# EUROPEAN PATENT APPLICATION

(11) **EP 4 400 327 A1**
(43) Date of publication of application: **17.07.2024**
(21) Application number: 23151092.6
(22) Date of filing: 11.01.2023
(51) Int. Cl.: B60B 1/02, B60B 1/00, B60B 5/02

(54) **CARBON FIBER REINFORCED THERMOPLASTIC SPOKE AND MANUFACTURING METHOD FOR THE SAME**

(71) Applicant: Corex Materials Corporation, Taichung City (TW)
(72) Inventor: CHIU, Shao-Chen, Taichung City (TW)
(74) Representative: Becker, Eberhard

(57) **Abstract**

A spoke has a carbon rod (10) and at least one connecting unit (20). The carbon rod (10) is made of a composite material containing thermoplastic resin and carbon fibers and has at least one blocking portion. Each one of the at least one connecting unit (20) has a tube (22) mounted on and around the carbon rod (10) and blocked by a corresponding one of the at least one blocking portion. The carbon rod (10) is heated and shaped to form the blocking portion. The spoke in accordance with the present invention blocks the connecting unit (20) by the blocking portion to promote a connection stability of the spoke.

## Description

### 1. Field of the Invention

The present invention relates to a part of a bicycle, and more particularly to a carbon spoke having a carbon rod made of a composite material containing thermoplastic resin and carbon fibers and having a solid structure.

### 2. Description of Related Art

With the thriving of bicycling, more and more people choose bicycles as equipment of transport and workout. A traditional spoke has a rod and two connecting units sleeved on and fixed to two opposite ends of the rod respectively. The two connecting units are configured to connect with the hub or the rim. Each connecting unit may be a spoke nipple.

A conventional carbon spoke has a carbon rod made of a composite material containing thermoplastic resin and carbon fibers. In order to fix the carbon rod and each connecting unit and to prevent the carbon rod and the connecting unit of the conventional carbon spoke from moving relative to each other, an inner surface of the connecting unit is coated by glue to combine the carbon rod and the connecting unit. Alternatively, the inner surface of each connecting unit may have a protrusion made of solidified glue to restrict the carbon rod and also prevent the carbon rod and the connecting unit from moving relative to each other.

However, over a period of time, the glue at the inner surface of each connecting unit would be deteriorated. The combination ability of the glue is reduced accordingly. Therefore, the connecting units and the carbon rod are often detached from each other.

To overcome the shortcomings of the conventional spoke, the present invention provides a carbon fiber reinforced thermoplastic spoke and a manufacturing method for the same to mitigate or obviate the aforementioned problems.

The main objective of the present invention is to promote a connection stability of a carbon spoke.

The spoke has a carbon rod and at least one connecting unit. The carbon rod is made of a composite material containing thermoplastic resin and carbon fibers and has at least one blocking portion. Each one of the at least one connecting unit has a tube mounted on and around the carbon rod and blocked by a corresponding one of the at least one blocking portion. The carbon rod is heated and shaped to form said blocking portion. The spoke in accordance with the present invention blocks said connecting unit by the said blocking portion to promote a connection stability of the spoke

Other objects, advantages, and novel features of the invention will become more apparent from the following detailed description when taken in conjunction with the accompanying drawings.

### IN THE DRAWINGS:

Fig. 1 is an exploded perspective view of a first embodiment of a carbon fiber reinforced thermoplastic spoke in accordance with the present invention;
Fig. 2 is a perspective view of the spoke in Fig. 1;
Fig. 3 is a cross-sectional side view of the spoke in Fig. 1;
Fig. 4 is a partially enlarged perspective view of the spoke in Fig. 1, showing a different configuration;
Fig. 5 is a perspective view of a second embodiment of a carbon fiber reinforced thermoplastic spoke in accordance with the present invention;
Fig. 6 is a cross-sectional side view of the spoke in Fig. 5;
Fig. 7 is a perspective view of a third embodiment of a carbon fiber reinforced thermoplastic spoke in accordance with the present invention;
Fig. 8 is a cross-sectional side view of the spoke in Fig. 7;
Fig. 9 is a cross-sectional side view of a fourth embodiment of a carbon fiber reinforced thermoplastic spoke in accordance with the present invention;
Fig. 10 is a cross-sectional side view of a fifth embodiment of a carbon fiber reinforced thermoplastic spoke in accordance with the present invention; and
Fig. 11 is a flowchart of a manufacturing method for a carbon fiber reinforced thermoplastic spoke in accordance with the present invention.

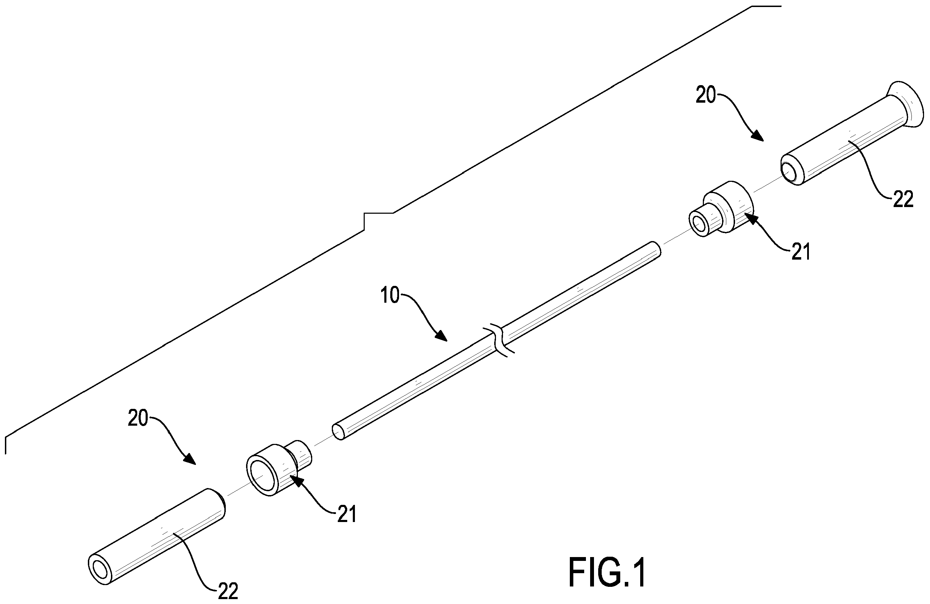

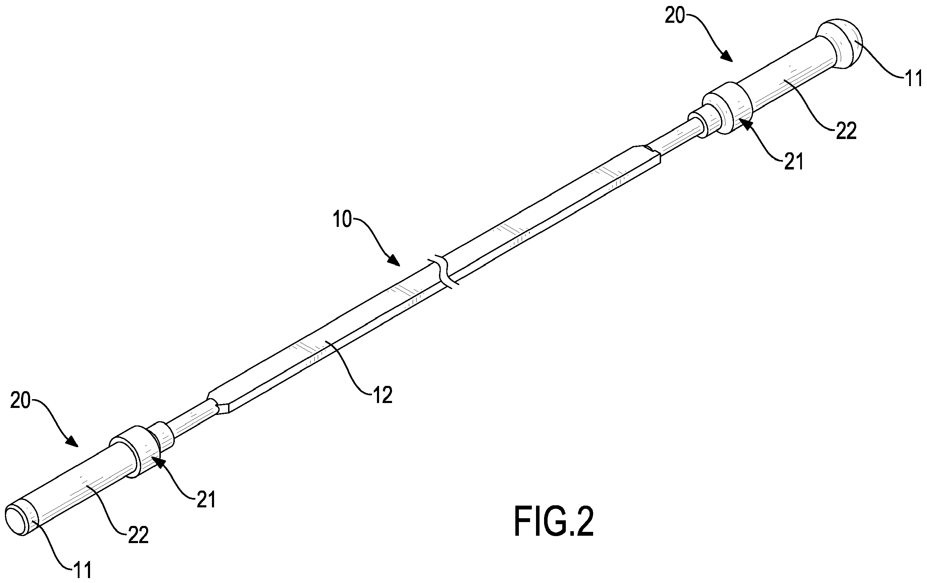

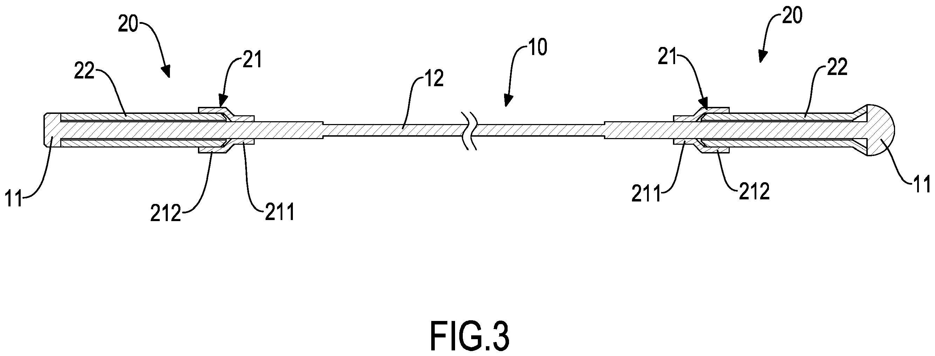

With reference to Figs. 1 to 3, a first embodiment of a carbon fiber reinforced thermoplastic spoke manufactured by a manufacturing method for the same has a carbon rod 10 and two connecting units 20. Wherein, the carbon rod 10 is made of a composite material containing thermoplastic resin and carbon fibers. The carbon rod 10 has two blocking portions 11 and a wind-resistant section 12. The two blocking portions 11 are respectively disposed at two opposite ends of the carbon rod 10. The wind-resistant section 12 is disposed at a middle portion of the carbon rod 10 and between the two blocking portions 11.

With reference to Figs. 1 to 3, each connecting unit 20 has a positioning sleeve 21 and a tube 22. The positioning sleeve 21 has a connected section 211 and a receiving section 212. The connected section 211 and the receiving section 212 are both ring-shaped and are coaxially connected to each other. The connected section 211 has an inner diameter smaller than an inner diameter of the receiving section 212. The tube 22 has an outer diameter smaller than the inner diameter of the receiving section 212. The connected section 211 and the receiving section 212 of each connecting unit 20 are mounted on and around the carbon rod 10. The two connecting units 20 are respectively adjacent to the two opposite ends of the carbon rod 10 and are respectively blocked by the two blocking portions 11.

With reference to Figs. 1 to 3, the tube 22 of each connecting unit 20 has two opposite ends. One of the two opposite ends of the tube 22 is blocked by a corresponding one of the two blocking portions 11, the other one of the two opposite ends of the tube 22 is inserted in the receiving section 212 of the positioning sleeve 21 of the connecting unit 20 and is blocked by the positioning sleeve 21. In the first embodiment of the present invention, the carbon rod 10 is heated and shaped to form the two blocking portions 11 configured to respectively block the two connecting units 20. An end portion of the tube 22 of one of the two connecting units 20 is a divergent conical end, the corresponding one of the blocking portions 11 corresponds to the divergent conical end in shape and is substantially spherical. The other one of the blocking portions 11 is shaped as a short pillar. In the present invention, the middle portion of the carbon rod 10 is heated and shaped to form the wind-resistant section 12 with a thin cross-section for reducing wind resistance.

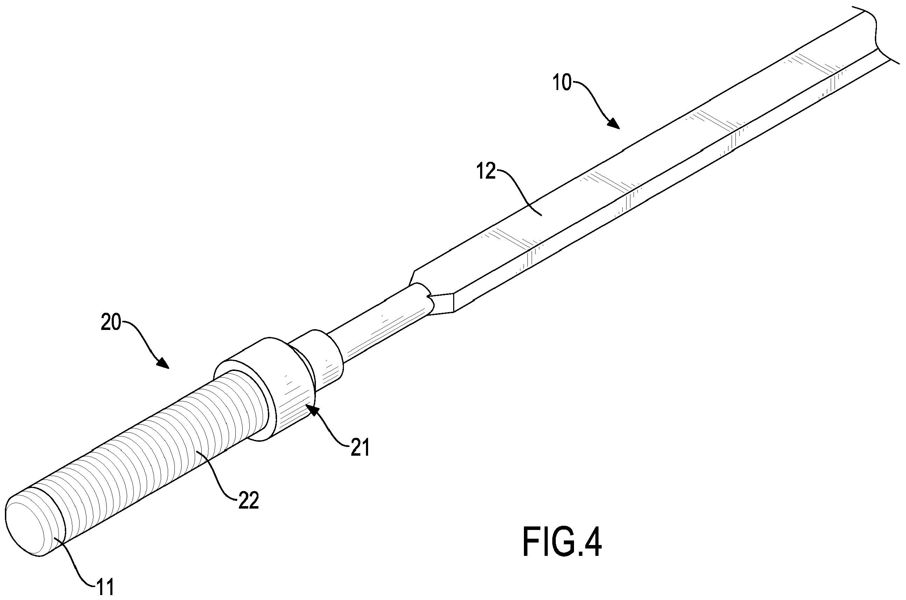

With reference to Fig. 4, in the present invention, peripheral surfaces of the tube 22 of one of the two connecting units 20 and the corresponding blocking portion 11 of the connecting unit 20 can be machined to form a thread, which is for screwing, on the corresponding blocking portion 11.

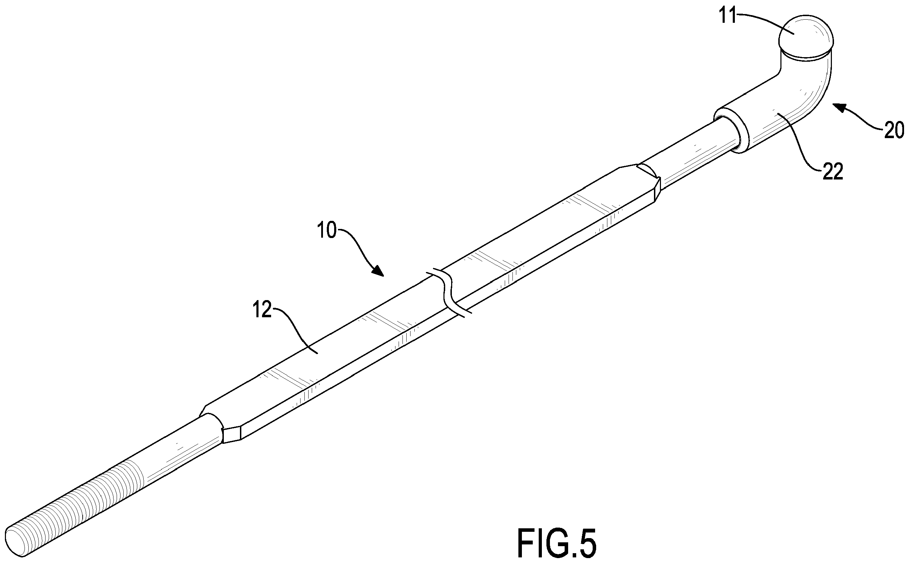

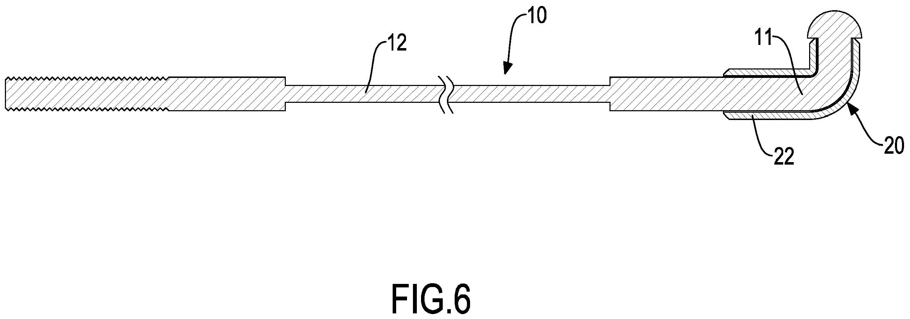

With reference to Figs. 5 and 6, a second embodiment of the spoke in accordance with the present invention is shown. The first embodiment and the second embodiment are similar in that the carbon rod 10 is heated and shaped to form said blocking portions 11 to block said connecting unit 20. Difference between the first and the second embodiments is that the second embodiment only has one connecting unit 20 and the carbon rod 10 only has one blocking portion 11 accordingly. In addition, in the second embodiment, the connecting unit 20 does not have the positioning sleeve 21 and only has the tube 22 mounted on and around the blocking portion 11. In the second embodiment of the present invention, the tube 22 of the connecting unit 20 and the blocking portion 11 are bent together. Therefore, the tube 22 of the connecting unit 20 is blocked by the blocking portion 11. In the second embodiment, the blocking portion 11 even has a protrusion which is substantially spherical and is disposed outside the tube 22.

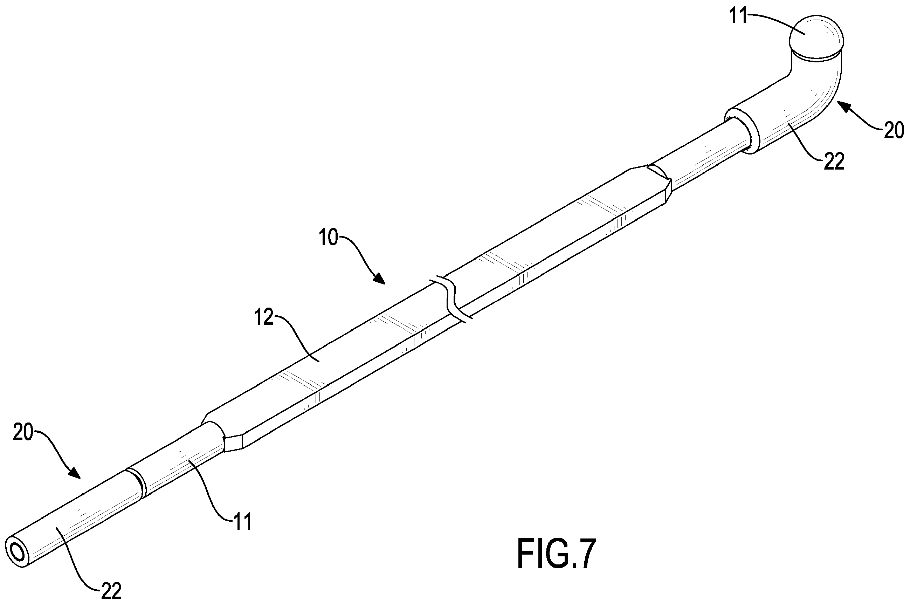

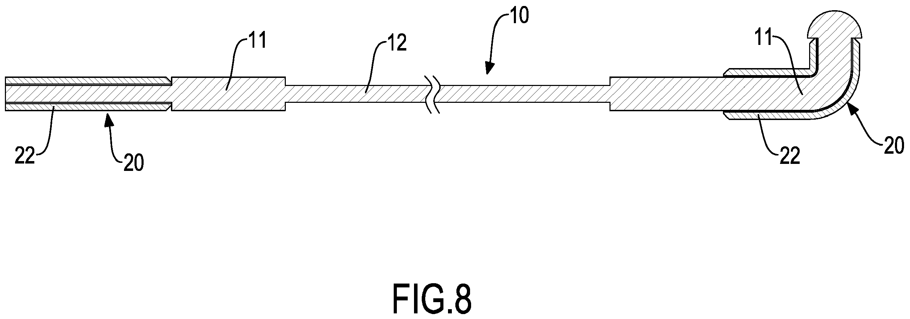

With reference to Figs. 7 and 8, a third embodiment of the spoke in accordance with the present invention is shown. The first, second, and third embodiments of the present invention are similar, as said carbon rod 10 is heated and shaped to form said blocking portion 11 for blocking said connecting unit 20. In the third embodiment, the spoke in accordance with the present invention also has the two connecting units 20 and the carbon rod 10. The carbon rod 10 also has two blocking portions 11 respectively blocking the two connecting units 20. In the third embodiment, each connecting unit 20 does not have the positioning sleeve 21 and only has the tube 22. Please refer to Figs. 7 and 8: the tube 22 of the connecting unit 20 sleeved adjacent to a right end of the carbon rod 10 is bent with and blocked by the blocking portion 11 disposed at the right end of the carbon rod 10. Please refer to Figs. 7 and 8 again: the tube 22 of the other connecting unit 20 is mounted on and around a left end of the carbon rod 10 and is blocked by the other blocking portion 11 formed between the tube 22 and the wind-resistant section 12 of the carbon rod 10.

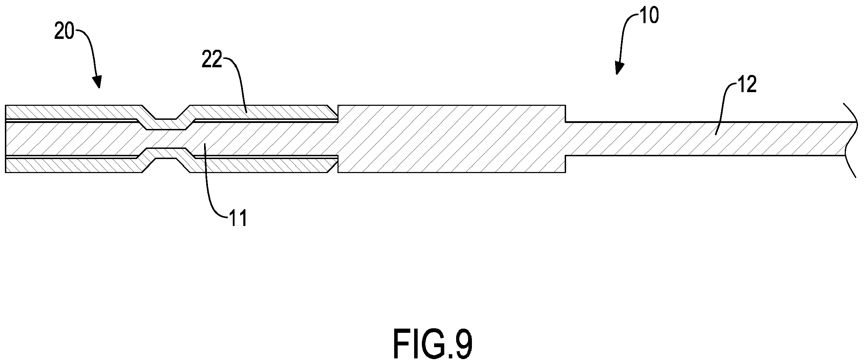

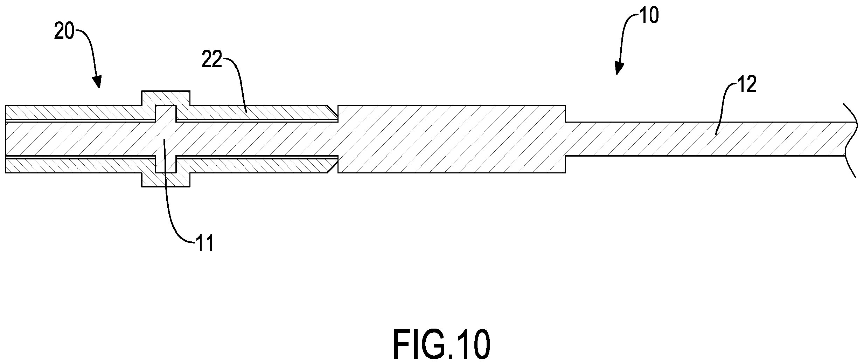

With reference to Figs. 9 and 10, a fourth embodiment and a fifth embodiment are respectively shown. In the fourth and the fifth embodiments, the tube 22 of each connecting unit 20 is made of a flexible material such as metal. The tube 22 and the carbon rod 10 are heated and shaped by pressing together to form said blocking portion 11 configured to block the tube 22 of said connecting unit 20.

In the first embodiment, one of the two blocking portions 11 is shaped as a short pillar, the other one of the two blocking portions 11 is shaped as a ball. Practically, as long as each blocking portion 11 is able to block one corresponding connecting unit 20 or the tube 22 of the corresponding one connecting unit 20, the shape and the position of said blocking portion 11 are not restricted. In the present invention, the cross-section of the wind-resistant section 12 of the carbon rod 10 is rectangular. Practically, as long as the cross-section of the wind-resistant section 12 is sufficiently thin for reducing wind resistance, the contour of the cross-section of the wind-resistant section 12 is not restricted.

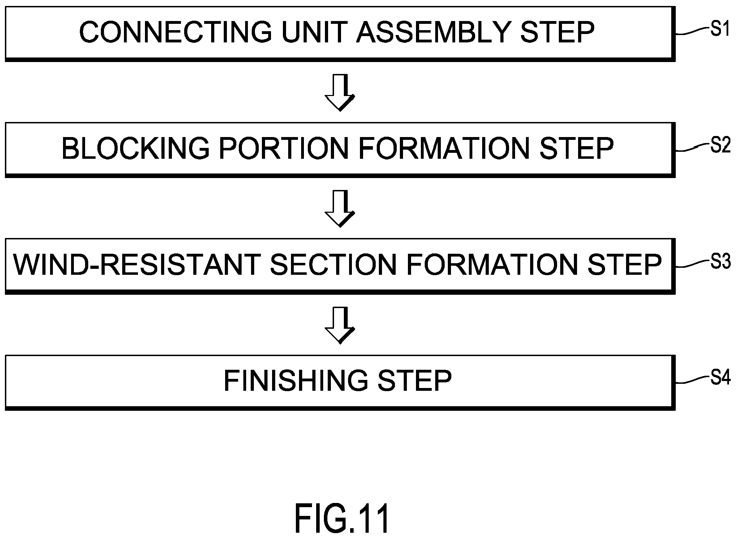

With reference to Fig. 11, a manufacturing method for a carbon fiber reinforced thermoplastic spoke comprises steps of a connecting unit assembly step S1, a blocking portion formation step S2, a wind-resistant section formation step S3, and a finishing step S4.

In the connecting unit assembly step S1: first of all, preparing one said carbon rod 10 made of a composite material containing thermoplastic resin and carbon fibers and a said connecting unit 20. Wherein, the connecting unit 20 has one said positioning sleeve 21 and one said tube 22. Then, mount the positioning sleeve 21 and the tube 22 of the connecting unit 20 on and around the carbon rod 10.

In the blocking portion formation step S2: heating and shaping the carbon rod 10 to form one said blocking portion 11 for blocking the tube 22 of the connecting unit 20. With reference to Figs. 5 to 8, in the blocking portion formation step S2, when the tube 22 is thermoplastic, the carbon rod 10 and the tube 22 mounted on and around the carbon rod 10 can be heated together and bent together. The blocking portion 11 and the tube 22 are both curved, so the tube 22 can be blocked by the blocking portion 11 accordingly. With reference to Figs. 9 and 10, when the tube 22 is flexible, the carbon rod 10 and the tube 22 mounted on and around the carbon rod 10 can be heated together and pressed together to shape the blocking portion 11 configured to block the tube 22.

In the wind-resistant section formation step S3: heating and shaping the middle portion of the carbon rod 10 to form the wind-resistant section 12 with said thin cross-section to reduce wind resistance. In the present invention, the wind-resistant section formation step S3 may be performed before the blocking portion formation step S2. Sequences of the blocking portion formation step S2 and the wind-resistant section formation step S3 are not limited.

In the finishing step S4: processing the blocking portion 11 to remove rough edges, formed by heating and shaping, on the blocking portion 11 and on the wind-resistant section 12. With reference to Fig. 4, in the finishing step S4, the blocking portion 11 may be milled to form the thread for screwing.

Compared to a conventional carbon spoke combining a carbon rod and a connecting unit by glue, the carbon fiber reinforced thermoplastic spoke, manufactured by the manufacturing method of the present invention, blocks the tube 22 of the connecting unit 20 via the blocking portion 11 formed on the carbon rod 10 by heating and shaping. The present invention combines or blocks the tube 22 of the connecting unit 20 in structure. The carbon rod 10 and the tube 22 of the connecting unit 20 are free from detaching from each other due to deterioration of the glue. The connection between the carbon rod 10 and the tube 22 of the connecting unit 20 is promoted.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A spoke, **characterized in that** the spoke comprises:
a carbon rod (10) made of a composite material containing thermoplastic resin and carbon fibers and having at least one blocking portion (11);
at least one connecting unit (20), each one of the at least one connecting unit (20) having a tube (22) mounted on and around the carbon rod (10) and blocked by a corresponding one of the at least one blocking portion (11);
wherein the carbon rod (10) is heated and shaped to form the at least one blocking portion (11).

2. The spoke as claimed in claim 1, wherein
each one of the at least one connecting unit (20) has a positioning sleeve (21) mounted on and around the carbon rod (10), fixed to the carbon rod (10), and being unmovable relative to the carbon rod (10); and
the tube (22) of each one of the at least one connecting unit (20) has two opposite ends, one of the two opposite ends of the tube (22) is blocked by the corresponding one of the at least one blocking portion (11), the other one of the two opposite ends of the tube (22) is blocked by the positioning sleeve (21) of the connecting unit (20).

3. The spoke as claimed in claim 2, wherein
the positioning sleeve (21) of each one of the at least one connecting unit (20) has
a connected section (211) shaped as a ring and having an inner diameter; and
a receiving section (212) shaped as a ring, coaxially connected to the connected section (211), and having an inner diameter larger than the inner diameter of the connected section (211); and
the tube (22) of each one of the at least one connecting unit (20) has an outer diameter smaller than the inner diameter of the receiving section (212) of the connecting unit (20);
one of the two opposite ends of the tube (22) of each one of the at least one connecting unit (20) is blocked by the corresponding one of the at least one blocking portion (11), the other one of the two opposite ends of the tube (22) is inserted in and blocked by the receiving section (212) of the positioning sleeve (21) of the connecting unit (20).

4. The spoke as claimed in claim 3, wherein the spoke has a thread formed on a peripheral surface of the tube (22) of one of the at least one connecting unit (20) and extending to a peripheral surface of the corresponding one of the at least one blocking portion (11) which blocks the tube (22) of the connecting unit (20).

5. The spoke as claimed in claim 1, wherein one of the at least one blocking portion (11) is curved, the tube (22) of one of the at least one connecting unit (20) mounted on and around the blocking portion (11) curves with the blocking portion (11) and is blocked by the blocking portion (11).

6. The spoke as claimed in any one of claims 1 to 5, wherein
the carbon rod (10) is heated and shaped to form a wind-resistant section (12) disposed at a middle portion of the carbon rod (10); and
the wind-resistant section (12) has a thin cross-section.

7. A manufacturing method for a carbon fiber reinforced thermoplastic spoke, **characterized in that** the method comprises:
a connecting unit assembly step (S1): preparing a carbon rod (10) made of a composite material containing thermoplastic resin and carbon fibers and a connecting unit (20) having a tube (22) and mounting the tube (22) on and around the carbon rod (10);
a blocking portion formation step (S2): heating and shaping the carbon rod (10) to form a blocking portion (11) for blocking the tube (22) of the connecting unit (20); and
a finishing step (S4): processing the blocking portion (11) to remove rough edges, formed by heating and shaping, on the blocking portion (11).

8. The spoke as claimed in claim 7, wherein the manufacturing method has a wind-resistant section formation step (S3): heating and shaping a middle portion of the carbon rod (10) to form a wind-resistant section (12) with a thin cross-section for reducing wind resistance.

9. The spoke as claimed in claim 7, wherein the carbon rod (10) and the tube (22) are heated and bent together to curve both the blocking portion (11) and the tube (22) such that the tube (22) is blocked by the blocking portion (11) in the blocking portion formation step (S2).

10. The spoke as claimed in claim 7, wherein the carbon rod (10) and the tube (22) are heated and pressed to shape the carbon rod (10) to form the blocking portion (11) configured to block the tube (22) in the blocking portion (11) formation step.
